# EUROPEAN PATENT APPLICATION

(11) **EP 4 593 278 A1**
(43) Date of publication of application: **30.07.2025**
(21) Application number: 22959513.7
(22) Date of filing: 21.09.2022
(51) Int. Cl.: H02M 7/48

(54) **POWER CONVERSION DEVICE**

(71) Applicant: GS Yuasa International Ltd., Kisshoin, Minami-ku, Kyoto-shi, Kyoto 601-8520 (JP)
(72) Inventor: TAKAGI Kazuto, Kyoto-shi, Kyoto 601-8520 (JP); ITO Yoichi, Kyoto-shi, Kyoto 601-8520 (JP)
(74) Representative: Grünecker Patent- und Rechtsanwälte PartG mbB
(86) International application number: PCT/JP2022/035114
(87) International publication number: WO 2024/062549

(57) **Abstract**

A power converting device (1) configured to cause power generated by a power generating device (2) to be converted into power suitable for a load (3) includes: a diode (11) configured to prevent backflow to the power generating device (2); a converter (13) configured to convert the power generated by the power generating device (2) into the power suitable for the load (3); and a capacitor (12) connected to a wiring line X connecting the diode (11) and the converter (13). The converter (13) is configured to operate with voltage control of the capacitor (12) so that a voltage of the capacitor (12) becomes a voltage command value Vc that is preset, and the converter (13) is configured to stop operating when the voltage of the capacitor (12) falls below an operation stop voltage V_{L} that is lower than the voltage command value Vc, and start operating when the voltage of the capacitor (12) exceeds an operation start voltage V_{H} that is higher than the operation stop voltage V_{L}.

## Description

### TECHNICAL FIELD

The present invention relates to a power converting device that causes power generated by a power generating device to be converted into power suitable for a load.

### BACKGROUND ART

In recent years, a solar cell has been in widespread use. However, power generated by the solar cell is affected by environmental conditions such as seasons and weather, and insufficient generated power that is weak is obtainable under adverse conditions. Moreover, the weak generated power is lost in a power conditioner, a DCDC converter, or the like, and thus the weak generated power is actually unusable. Therefore, a technique has been proposed in which a weak current generated by power generation is efficiently collected by a capacitor and power generated by a solar cell is efficiently used (see, for example, Patent Document 1).

In Patent Document 1, a capacitor is included, which is connected to a solar cell. When an amount of power generated by the solar cell exceeds a predetermined value, the power from the solar cell is supplied to a load, and when the amount of power generated by the solar cell is equal to or lower than the predetermined value, the capacitor is charged with the power from the solar cell.

### PRIOR ART DOCUMENT

### PATENT DOCUMENT

Patent Document 1: JP-A-2018-129980

### SUMMARY OF THE INVENTION

### PROBLEMS TO BE SOLVED BY THE INVENTION

In the conventional technique, a switch element is turned on and off in accordance with the amount of power generated by the solar cell, whereby control is performed as to whether the capacitor is charged or not. Therefore, it is necessary to perform complicated work of setting an appropriate threshold for turning on and off the switch element. The on and off operation of the switch element takes a period during which a power conditioner or a DCDC converter is stopped, and the generated power is not feedable to the load.

One aspect of the present invention provides a power converting device capable of utilizing weak power from a power generating device by charging a capacitor with the weak power, without using a switch element.

### MEANS FOR SOLVING THE PROBLEMS

A power converting device according to one aspect of the present invention is a power converting device configured to cause power generated by a power generating device to be converted into power suitable for a load, the power converting device including: a diode configured to prevent backflow to the power generating device; a converter configured to convert the power generated by the power generating device into the power suitable for the load; and a capacitor connected to a wiring line connecting the diode and the converter, in which the converter is configured to operate with voltage control of the capacitor so that a voltage of the capacitor becomes a voltage command value that is preset, and the converter is configured to stop operating when the voltage of the capacitor falls below an operation stop voltage that is preset and that is lower than the voltage command value, and start operating when the voltage of the capacitor exceeds an operation start voltage that is preset and that is higher than the operation stop voltage.

According to this one aspect of the present invention, simply by setting the operation stop voltage, at which the converter stops operating, and the operation start voltage, at which the converter starts operating, it is possible to utilize weak power from the power generating device by charging the capacitor with the weak power, without using a switch element.

### BRIEF DESCRIPTION OF THE DRAWINGS

Fig. 1 is a configuration diagram illustrating a configuration of an embodiment of a power converting device.
Fig. 2 is a diagram illustrating a relationship between power, generated by a power generating device illustrated in Fig. 1, and a voltage of a capacitor.
Fig. 3 is a diagram illustrating an application example of the power converting device illustrated in Fig. 1.

### MODE FOR CARRYING OUT THE INVENTION

Hereinafter, an embodiment of the present invention will be described in detail with reference to the drawings. Note that, in the following embodiment, components exhibiting similar functions are denoted by an identical reference sign, and the description thereof will be omitted as appropriate.

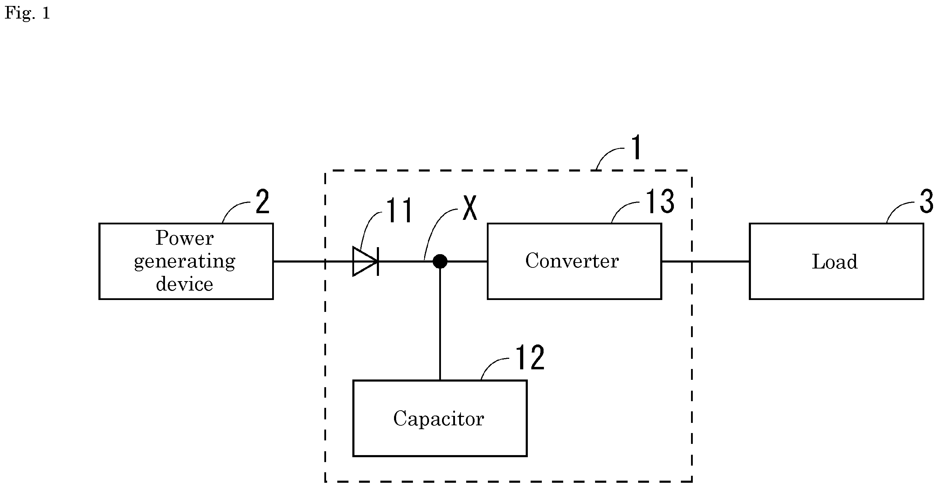

Referring to Fig. 1, a power converting device 1 of the present embodiment is a device that causes power generated by a power generating device 2 to be converted into power suitable for a load 3, and includes a diode 11, a capacitor 12, and a converter 13.

The power generating device 2 for which conversion is performed by the power converting device 1 is power generating equipment, of a type in which generated power varies in accordance with environmental conditions, whose example includes a solar cell or plant-based power generation that generates power from natural energy.

The diode 11 is a backflow prevention diode including an anode connected to an output terminal of the power generating device and a cathode connected to an input terminal of the converter 13, and prevents backflow of the electric charge of the capacitor 12 to the power generating device 2.

The capacitor 12 is connected to a wiring line X, connecting the cathode of the diode 11 and the converter 13, without a switch element interposed therebetween. The capacitor 12 exhibits a charge curve in which the voltage is gradually increased from 0 V by charge, and the capacitor 12 is directly charged with power generated by the power generating device 2 via the diode 11. Moreover, the capacitor 12 functions as a buffer that supports a voltage necessary for operation of the converter 13, during a normal time when the power generating device 2 generates sufficient power. Note that the lower limit of the capacity of the capacitor 12 is determined from the loss of the converter 13, and the upper limit of the capacity of the capacitor 12 is determined by a charge time (an amount of power) desired to be secured during a time when the power generating device 2 generates low power (during a time of weak light in the case of a solar cell).

As the capacitor 12, a nano-hybrid capacitor (NHC) or a super redox capacitor (SRC) can be used. In a case where the nano-hybrid capacitor is used as the capacitor 12, the capacitor 12 can function as a filter for a low-frequency voltage ripple. Thus, it is possible to reduce a load on an electrolytic capacitor in the converter 13, and it is possible to achieve downsizing of the converter 13 and a long life of the converter 13.

The converter 13 is a converter that converts power generated by the power generating device 2 into power suitable for the load 3. In a case where the load 3 is an AC system, self-consumption, or the like, and power suitable therefor is AC power, a DCAC converter is employed as the converter 13. In a case where the load 3 is a storage battery or the like and power suitable therefor is DC power, a DCDC converter is employed as the converter 13.

The converter 13 operates with voltage control of the capacitor 12, that is, operates so that a voltage value of the wiring line X to which the capacitor 12 is connected matches a preset voltage command value Vc. For example, in a case where the power generating device 2 is a solar cell, without being required to perform maximum power point tracking control (MPPT control), the voltage of the capacitor 12 is fixed to the voltage command value Vc, and power generated by the power generating device 2 and output power of the converter 13 become equal to each other, during the normal time when the power generating device 2 generates sufficient power.

In addition, for the converter 13, an operation stop voltage V_{L} is preset, and the converter 13 stops conversion operation when the voltage value of the wiring line X falls below the operation stop voltage V_{L}. In a state where the converter 13 stops operating, the capacitor 12 is charged with the power generated by the power generating device 2, and the voltage of the capacitor 12 (the wiring line X) increases.

Further, for the converter 13, an operation start voltage V_{H} higher than the operation stop voltage is preset, and the converter 13 starts the conversion operation when the voltage value of the wiring line X exceeds the operation start voltage V_{H}. The operation start voltage V_{H} may be the voltage command value Vc used in the voltage control of the capacitor 12. However, by setting the operation start voltage V_{H} to a value lower than the voltage command value Vc, it is possible to maintain the voltage of the capacitor 12 at a low voltage, thereby allowing the capacitor 12 to be more efficiently charged with weak power from the power generating device 2.

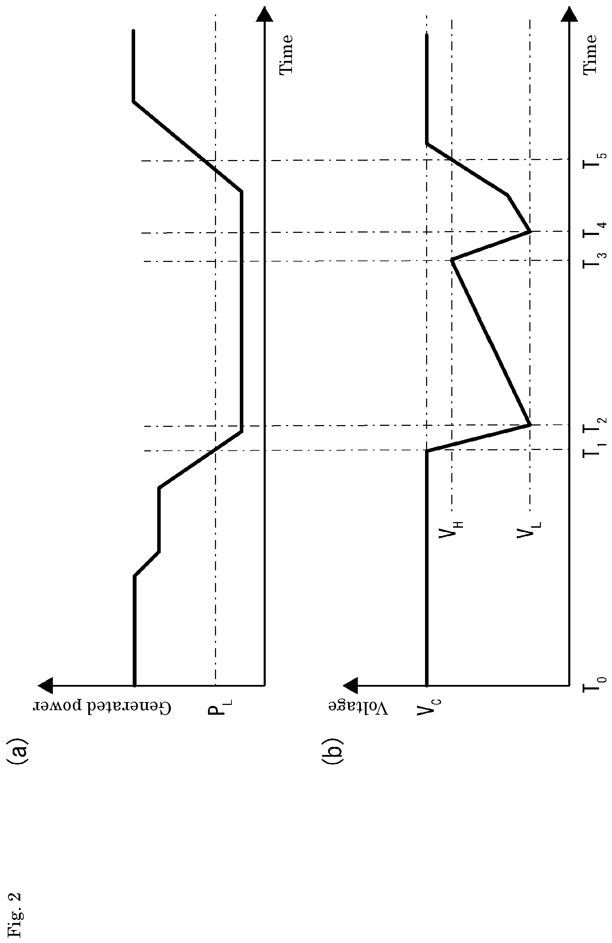

Next, a relationship between power, generated by the power generating device 2, and a voltage of the capacitor 12 (the wiring line X) will be described in detail with reference to Fig. 2. In Fig. 2, (a) illustrates a time transition of the power generated by the power generating device 2, and (b) illustrates a time transition of the voltage of the capacitor 12 (the wiring line X).

During the normal time when the power generating device 2 generates sufficient power, the voltage of the capacitor 12 is in a state of being fixed to the voltage command value Vc with the voltage control through the converter 13 as from a time T₀ to a time T₁, and the capacitor 12 functions as a buffer that supports the voltage necessary for the operation of the converter 13. Then, power equal to the power generated by the power generating device 2 is output from the converter 13 to the load 3.

When the power generated by the power generating device 2 falls below a minimum operation power set value P_{L} for the converter 13 at the time T₁, the power with which the capacitor 12 has been charged starts to be consumed, and the voltage of the capacitor 12 decreases. Note that the minimum operation power set value P_{L} is operation power for the converter 13 at which or under which the efficiency of the converter 13 is low and thus most of the power generated by the power generating device 2 is lost in the converter 13, and is not a value set externally but a value set by the characteristics of the converter 13.

Then, when the voltage of the capacitor 12 falls below the operation stop voltage V_{L} at a time T₂, the converter 13 stops the conversion operation. In a state where the converter 13 stops the conversion operation, the capacitor 12 is charged with the power generated by the power generating device 2, and the voltage of the capacitor 12 increases as from the time T₂ to a time T₃. That is, the capacitor 12 is charged with such weak power that the power generated by the power generating device 2 falls below the minimum operation power set value P_{L} and is lost in the converter 13.

When the voltage of the capacitor 12 exceeds the operation start voltage V_{H} at the time T₃, the converter 13 starts the conversion operation. As a result, the voltage of the capacitor 12 decreases. Then, when the voltage of the capacitor 12 falls below the operation stop voltage V_{L} at a time T₄, the converter 13 stops the conversion operation. Thus, after the capacitor 12 is charged with the weak power generated by the power generating device 2 from the time T₂ to the time T₃, the weak power is supplied to the load 3 through the converter 13 from the time T₃ to the time T₄.

Then, at a time T₅ when the voltage of the capacitor 12 exceeds the operation start voltage V_{H} and the converter 13 starts the conversion operation, the voltage of the capacitor 12 shifts to a state of being fixed to the voltage command value Vc, in a case where the power generated by the power generating device 2 exceeds the minimum operation power set value P_{L}.

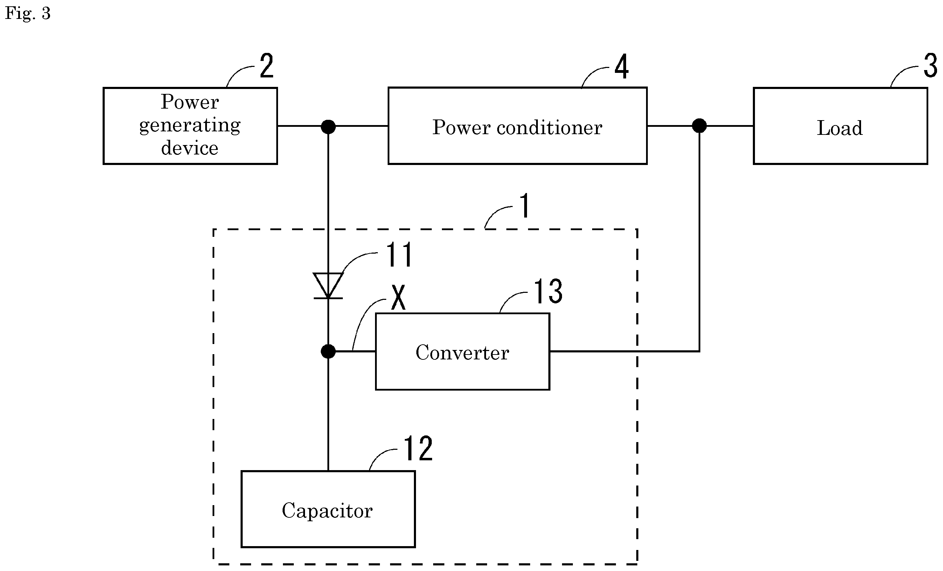

As illustrated in Fig. 3, the power converting device 1 may be connected in parallel with a power conditioner 4 that performs maximum power point tracking control (MTTP control). In this case, the power conditioner 4 is operated when the power generated by the power generating device 2 is equal to or higher than a preset power threshold, and is stopped in its operation when the power generated by the power generating device 2 is lower than the power threshold. Thus, when the power generated by the power generating device 2 is equal to or higher than the power threshold, it is possible to efficiently utilize the generated power through the maximum power point tracking control performed by the power conditioner 4, and when the power generated by the power generating device 2 is lower than the power threshold, it is possible to fully utilize the generated power (weak power) through the power converting device 1.

As described above, according to the present embodiment, a power converting device 1 configured to cause power generated by a power generating device 2 to be converted into power suitable for a load 3 includes: a diode 11 configured to prevent backflow to the power generating device 2; a converter 13 configured to convert the power generated by the power generating device 2 into the power suitable for the load 3; and a capacitor 12 connected to a wiring line X connecting the diode 11 and the converter 13. The converter 13 is configured to operate with voltage control of the capacitor 12 so that a voltage of the capacitor 12 becomes a voltage command value Vc that is preset, and the converter 13 is configured to stop operating when the voltage of the capacitor 12 falls below an operation stop voltage V_{L} that is lower than the voltage command value Vc, and start operating when the voltage of the capacitor 12 exceeds an operation start voltage V_{H} that is higher than the operation stop voltage V_{L}.

With this configuration, simply by setting the operation stop voltage V_{L}, at which the converter 13 stops operating, and the operation start voltage V_{H}, at which the converter 13 starts operating, it is possible to utilize weak power from the power generating device 2 by charging the capacitor 12 with the weak power, without using a switch element.

Further, according to the present embodiment, the operation start voltage V_{H} is set to a value lower than the voltage command value.

With this configuration, it is possible to maintain the voltage of the capacitor 12 at a low voltage, thereby allowing the capacitor 12 to be more efficiently charged with weak power from the power generating device 2.

Further, according to the present embodiment, the power converting device 1 is connected in parallel with a power conditioner 4 configured to perform maximum power point tracking control, the power conditioner 4 being configured to operate when the power generated by the power generating device 2 is equal to or higher than a power threshold, and stop operating when the power generated by the power generating device 2 is lower than the power threshold.

With this configuration, when the power generated by the power generating device 2 is equal to or higher than the power threshold, it is possible to efficiently utilize the generated power through the maximum power point tracking control performed by the power conditioner 4, and when the power generated by the power generating device 2 is lower than the power threshold, it is possible to fully utilize the generated power (weak power) through the power converting device 1.

Although the present invention has been described above with reference to the specific embodiment, it goes without saying that the embodiment described above is merely an example and can be changed and implemented within the scope not departing from the gist of the present invention.

### DESCRIPTION OF REFERENCE SIGNS

1: Power converting device
2: Power generating device
3: Load
4: Power conditioner
11: Diode
12: Capacitor
13: Converter
P_{L}: Minimum operation power set value
Vc: Voltage command value
V_{H}: Operation start voltage
V_{L}: Operation stop voltage
X: Wiring line

## Claims

1. A power converting device configured to cause power generated by a power generating device to be converted into power suitable for a load, the power converting device comprising:
a diode configured to prevent backflow to the power generating device;
a converter configured to convert the power generated by the power generating device into the power suitable for the load; and
a capacitor connected to a wiring line connecting the diode and the converter,
wherein the converter is configured to operate with voltage control of the capacitor so that a voltage of the capacitor becomes a voltage command value that is preset, and the converter is configured to stop operating when the voltage of the capacitor falls below an operation stop voltage that is preset and that is lower than the voltage command value, and start operating when the voltage of the capacitor exceeds an operation start voltage that is preset and that is higher than the operation stop voltage.

2. The power converting device according to claim 1, wherein the operation start voltage is set to a value lower than the voltage command value.

3. The power converting device according to claim 1 or 2, wherein the power converting device is connected in parallel with a power conditioner configured to perform maximum power point tracking control, the power conditioner being configured to operate when the power generated by the power generating device is equal to or higher than a power threshold that is preset, and stop operating when the power generated by the power generating device is lower than the power threshold.
